# EUROPEAN PATENT APPLICATION

(11) **EP 2 719 640 A1**
(43) Date of publication of application: **16.04.2014**
(21) Application number: 13380012.8
(22) Date of filing: 03.04.2013
(51) Int. Cl.: B65D 88/52

(54) **Dismountable and reusable shipping container and method for automatically dismounting such shipping container**

(30) Priority: 15.10.2012 ES 201231576
(71) Applicant: López Navarro, Ferran, 08029 Barcelona (ES); Agusti Larumbe, Alejandro, 08022 Barcelona (ES); Burgell Bonet, Guillem, 17003 Girona (ES)
(72) Inventor: López Navarro, Ferran, 08029 Barcelona (ES); Agusti Larumbe, Alejandro, 08022 Barcelona (ES); Burgell Bonet, Guillem, 17003 Girona (ES)
(74) Representative: Juncosa Miro, Jaime

(57) **Abstract**

The present invention relates to a system for a reusable, dismountable freight transport container (1) formed by platforms (2a and 2b), pillars (3) and closure panels (5) attached by means of bolts (10) provided with an inner head (10c), an outer head (10b), and a spacer (11) that keeps said outer heads separated from the outer face of the container to make it easier to cut them. The present invention also relates to a method of dismounting that consists of cutting said bolts automatically from outside the container, and the subsequent disassembling of the parts forming said container, and the subsequent stacking of all its components in a flat bundle for transport.

## Description

### Field of the Invention

The present invention relates to a reusable dismountable container and to the method for automatically dismounting said container by means of an automated dismounting station, which enables stacking the parts forming one of said containers and bundling them in a fraction of the original volume of the container, such that a plurality of these dismounted containers occupy the same volume as a single mounted container.

### State of the Art

Freight transport containers are usually not dismountable, and their parts are attached by means of welding, or as in the case of patent US3456830, by means of rivets, but with a configuration that greatly complicates dismounting because it was not designed taking this possibility into account. As a result, the cargo-free transport thereof is a burden because logistics costs are paid according to volume, not weight.

Systems for reducing the cargo-free volume of containers to lower transport costs are known to try to solve this problem.

Some inventions propose attaching the faces of the container, or subdivisions thereof, by means of hinges, with a geometry that allows collapsing the container so that it takes up a fraction of its original volume. The problem with such solutions is that due to harsh transport conditions and the heavy loads these containers bear, they experience deformations and blows and as a result the containers can no longer be collapsed after a few uses, this being a delicate, expensive and hard to repair solution. WO2012154036 of HOLLAND CONTAINER INNOVATION can be mentioned to that effect.

Another known solution is to disassemble the parts forming the container as described in US 5265748, for example, where a dismountable container is anticipated, wherein the faces forming it can be assembled and disassembled, by means of attachments formed by wedges inserted in aligned holes made in the different parts forming said container, and where some of said wedges are provided with screws to assure their position and increase the force exerted by the wedge against the walls of the hole housing it. This solution involves a manual dismounting, and furthermore the screwed attachments must be dismounted by two operators working together with one inside and one outside the container, so the container must be unloaded before dismounting can begin. Furthermore, the wedges that are not fixed by means of screws can become detached during transport due to vibrations or blows.

Patent US20090032530A1, considered the closest background document, describes a system for a dismountable container formed by two platforms attached by means of a plurality of pillars inserted in sockets arranged in said platforms, and attached thereto by means of screws. Side panels also screwed to the set complete the system. This solution has the same drawback as the preceding document relating to manual dismounting by operators who have to access the inside of the container, and therefore requires unloading the container to allow access. Another drawback of the mentioned invention is that the deformations of the parts forming this system caused by movements during sea or land transport or handling (lifting and unloading the container) can cause the holes to become misaligned, avoiding future re-assembly of the container, or even making dismounting impossible as the screws become stuck in the holes.

### Brief Description of the Invention

The present invention contributes to solving the preceding and other drawbacks by providing a reusable dismountable container and a method for automatically dismounting said container.

The proposed assembled container will form a parallelepiped receptacle with dimensions and fastenings that are compatible with transport and storage systems common in such containers, and it could be disassembled into parts that are suitable for being stacked together with the base and ceiling platforms, on top of one other, forming a flat bundle with dimensions and fastenings that are also compatible with common systems but which has dimensions that are a submultiple of the dimension of the assembled container, such that a plurality of dismounted containers could be transported in the volume occupied by a standard container. Said container could be assembled and disassembled many times by means of an automated process and without requiring repairs or maintenance.

The container includes at least one lower platform and at least one upper platform, both attached to and spaced from one another by means of a plurality of pillars, and complete the set a plurality of closure panels closing its sides, which may include doors.

The platforms include connecting means complementary with other connecting means arranged at the upper and lower ends of the pillars. Said connecting means of the lower and upper platforms have a plurality of fixing holes which are axially aligned with complementary holes provided in the connecting means of the pillars when the container is assembled.

Said fixing holes allow attaching the parts of the container by inserting bolts in them. Said fixing holes have certain clearance with respect to the diameter of said bolts, such that the deformations of the platforms, pillars, or closure panels due to their assembly or transport will not prevent being able to insert or remove the bolts in/from said fixing holes due to misalignment thereof.

As a non-limiting example, the bolts can be hot-formed rivets, which assures a strong, firm and permanent attachment of the parts forming the container; the inner head and outer head of said rivet furthermore distribute stresses over the surface surrounding the fixing hole and reduce the deformations of said holes occurring during transport, in comparison with other fixing methods, thereby allowing a higher degree of system reuse.

The closure panels protect the sides of the container and are fitted between the pillars and the lower and upper platforms. Said platforms can include a fairly low peripheral partition wall provided with boreholes complementary to other boreholes made in a position close to the upper and lower edges of said closure panels, such that the panels can be fixed to the partition walls by means of bolts which, by way of non-limiting example, can be cold-drawn deformed rivets applied from the outside.

To dismount the container, it is necessary to cut the shaft of the rivets to therefore be able to remove the inner head and outer head of said rivets. This feature allows maintaining the tamper-proofing of the container during transport, and that certainty can be increased by means of adding physical or electronic marks in said rivets.

To facilitate the job of cutting the shaft of the rivets for dismounting the container, and to allow the automation thereof, all of said rivets have a spacer interposed between the outer head of the rivet and the outer wall of the container. This spacer distances the outer head of the rivet from the outer wall of the container, thereby leaving a portion of the shaft of the rivet accessible to make it easier to cut it by means of cutting tools, while at the same time maintaining the mechanical qualities of said rivet.

The method for dismounting and mounting a container is described below.

Firstly, the container is placed in the disassembling station, where cutting tools operating from the outside (generally on two opposite outer faces) will perform the automated cutting of all the rivets, cutting the spacers inserted therein and the shaft of said rivet at the same time. This operation can be readily automated as a result of the fact that all the rivets are parallel to one another, they all project from the body of the container as a result of the spacers, and that only two substantially symmetrical planes of cut are needed to access all the rivets of the container.

Secondly, the pieces of the rivets left inside the fixing holes are pushed into the container, thus releasing the parts forming the container which are now kept attached only by means of the connecting means.

Thirdly, the parts are removed by pulling them up using cranes, starting with the upper platform, continuing with the closure panels, and ending with the pillars. All the removed parts are placed flat on top of the lower platform, in the space confined between the peripheral partition walls of the lower platform, and are finally covered with the upper platform.

A set of these dismounted containers can be stacked until the height of said stack is equal to the usual height of an assembled container. This set of containers is attached by fastening means to allow safe transport.

The method of assembly consists of a first pre-assembly of all the parts in the reverse order in which they were dismounted, attaching them using the connecting means, for subsequently fixing them by means of rivets applied by hot riveting inserted in the fixing holes for fixing the structural frame, and by means of cold-deformed rivets inserted in the boreholes of the peripheral partition walls for fixing the closure panels.

The dismounting process can allow at a certain time of the process having the entire container assembled, but without the upper platform, allowing the unloading of freight by means of cranes, to subsequently finish dismounting the container. That is possible as a result of being able to integrally perform the operation for disassembling container from the outside, even if the inside of the container is occupied by freight.

### Brief Description of the Drawings

The foregoing and other features and advantages will become more evident from the following detailed description of the embodiment in reference to the attached drawings, in which:

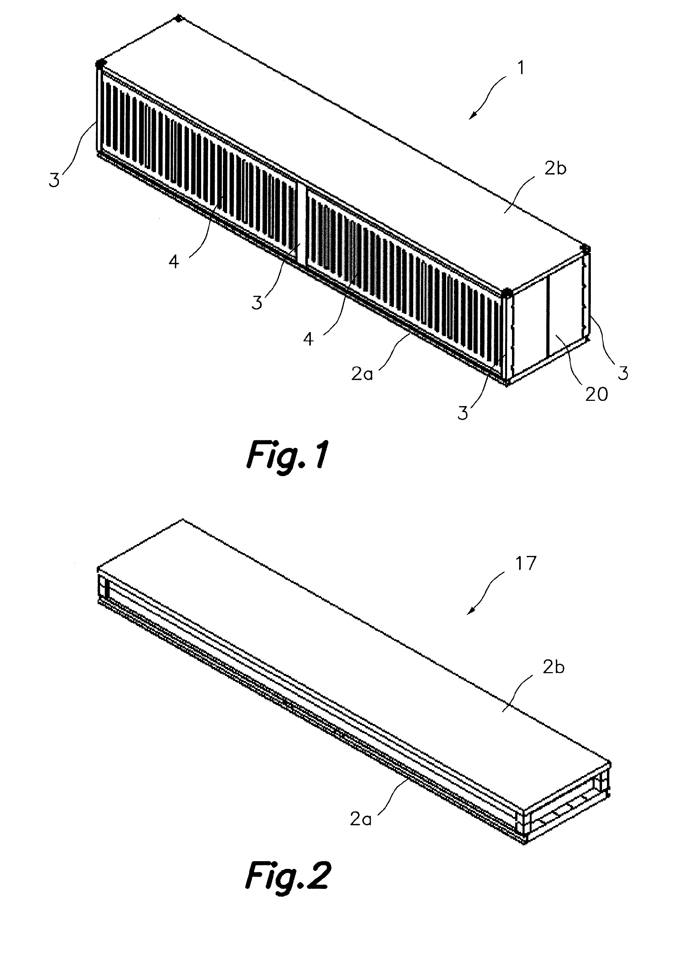

Figure 1 shows an axonometric view of the assembled dismountable container;
Figure 2 shows an axonometric view of the reusable dismountable container disassembled and stacked forming a flat bundle;

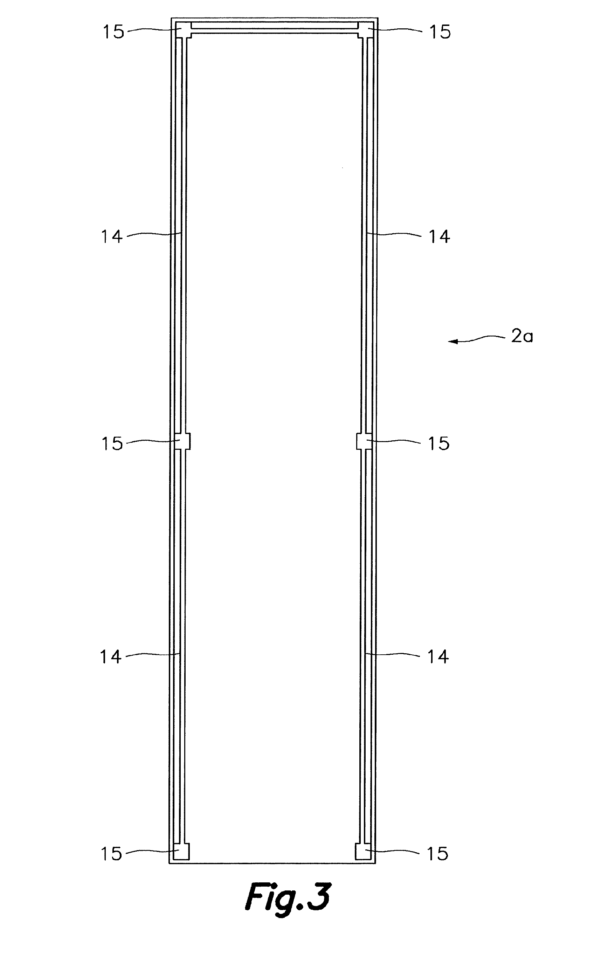

Figure 3 shows a plan view of the lower platform;
Figure 4 shows an exploded axonometric view of a corner of the structural frame, where a pillar is shown in a position close to its position for assembly with the lower platform, seen from outside the container;
Figure 5 shows an exploded axonometric view of a corner of the structural frame, where a pillar is shown in a position close to its position for assembly with the lower platform, seen from inside the container;
Figure 6 shows an exploded axonometric view of a central portion of the container, where a pillar, two closure panels, and the respective fixing bolts are shown in a position close to their position for assembly with the lower platform, seen from outside the container;
Figure 7A shows a cross-section view of a protuberance fitted with a pillar and with the respective fixing bolts in place according to a first embodiment in which an access opening made in one of the faces of the coupling portion allows the inner head of said bolts to act directly on the inner face of the protuberance;
Figure 7B shows a cross-section view of a protuberance fitted with a pillar and with the respective fixing bolts in place according to a second embodiment in which the inner head of said bolts acts directly on the inner face of the coupling portion;

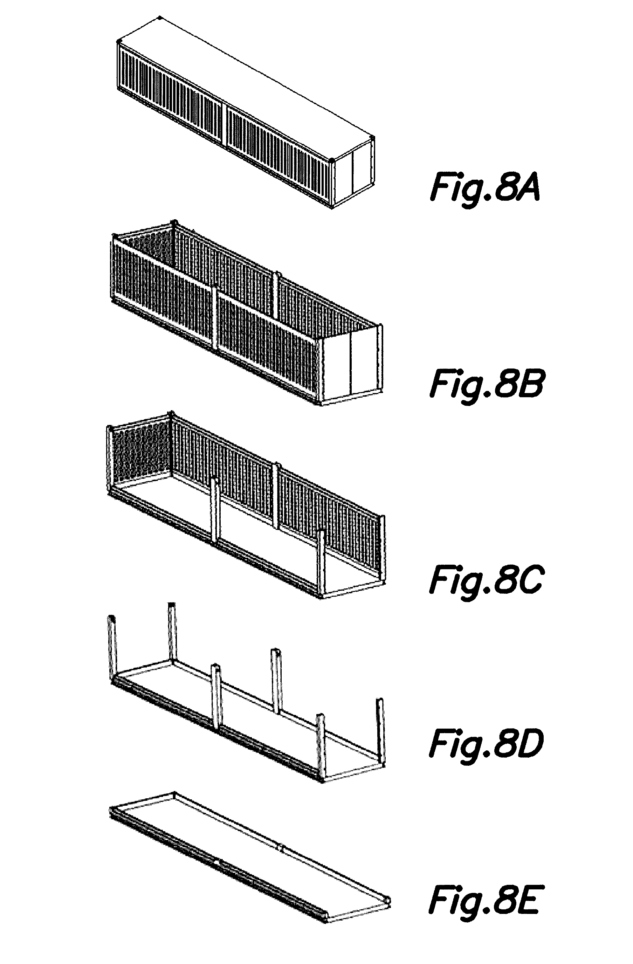

Figure 8A shows an axonometric view of the initial state of the dismounting process, where the container is completely assembled;
Figure 8B shows an axonometric view of an intermediate phase of the dismounting process, in which the upper platform is removed from the container after cutting the bolts attaching said platform to the pillars;
Figure 8C shows an axonometric view of an intermediate phase of the dismounting process, in which the closure panels are removed after cutting the rivets attaching the sides of said panels to the base;
Figure 8D shows an axonometric view of an intermediate phase of the dismounting process, in which the pillars are removed;
Figure 8E shows an axonometric view of the final state of the dismounting process, in which only the lower platform remains;

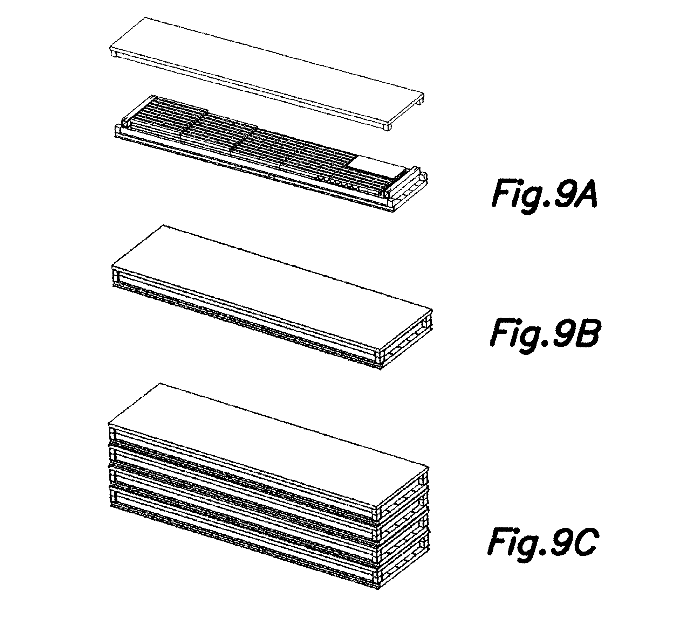

Figure 9A shows an axonometric view of the stacking of the parts forming the container in the space confined between the peripheral partition walls of the lower platform;
Figure 9B shows an axonometric view of the flat bundle formed by the lower platform and the upper platform placed one on top of the other, confining the rest of the parts forming the container therein; and
Figure 9C shows an axonometric view of a set of stacked and attached flat bundles forming a transport unit of the size of an assembled container, ready for transport.

### Detailed Description of an Embodiment

The system for a reusable dismountable container 1 according to a preferred embodiment includes a lower platform 2a and an upper platform 2b, both attached to and spaced from one another by means of a plurality of pillars 3, closure panels 5 and a door panel 20, said panels acting as vertical enclosure members of the container 1.

The container 1 has dimensions and fastenings that are compatible with transport and storage systems common in such containers for sea transport, which is important due to the enormous standardization in this field.

The lower platform 2a includes solid protuberances 15 firmly attached to its upper face or integral therewith, arranged adjacent to the corners of said lower platform 2a, and in the central points of its longest sides. Each of said protuberances 15 has at least one fixing through hole 7 perpendicular to the longer sides of the container 1, such that all the fixing holes 7 of all the protuberances 15 are parallel to one another.

The platform 2a also includes a peripheral partition wall 14 consisting of a plate arranged perpendicular to the upper face of the lower platform 2a adjacent to its entire perimeter, except for the side of the door panel 20, and with a height, for example, equal to the height of the protuberances 15. The peripheral partition wall 14 has a step and boreholes 9 parallel to the fixing holes 7, which serve for fixing the lower end of the closure panels 5.

The upper platform 2b is symmetrical to the lower platform 2a, including the same protuberances 15 and peripheral partition walls 14, but they are attached to its lower face.

The pillars 3 are formed by metal sections, for example hollow metal sections, sized to withstand the loads to which they will support and so that their upper and lower ends can act as a coupling portion 13 and can be coupled to the protuberances 15 with a certain clearance, since their shape and size are complementary to the shape and size of said protuberances 15, such that the protuberance 15 is inserted in the coupling portion 13. Said pillars 3 also have vertical channels 16 along their entire length.

Said coupling portions 13 of the pillar 3 have fixing holes 7 in at least one of their faces in a number and position such that when said coupling portions 13 are connected to said protuberances 15, said fixing holes 7 of the pillar 3 are axially aligned with the fixing holes 7 of the protuberances 15.

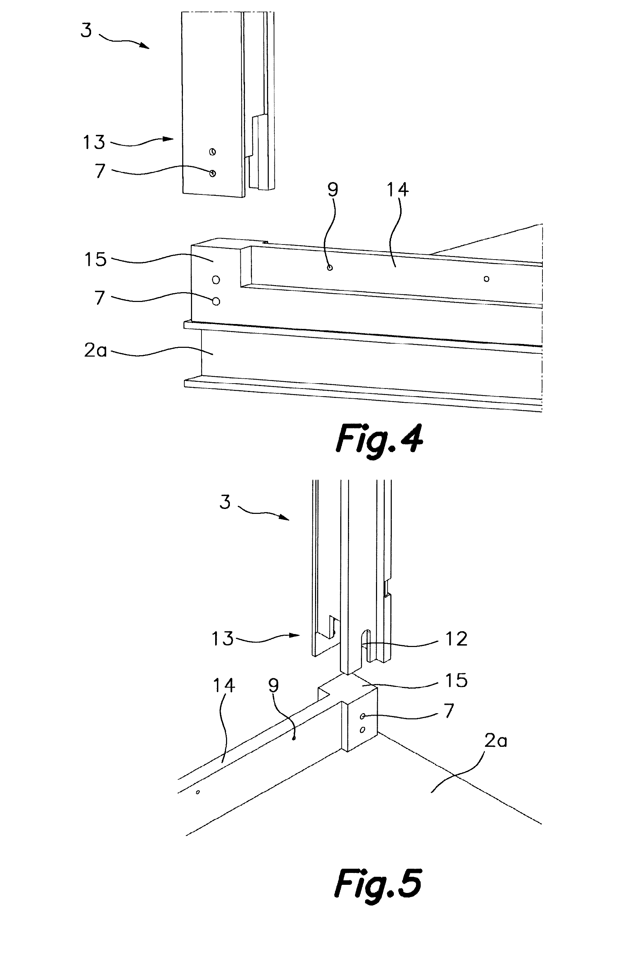

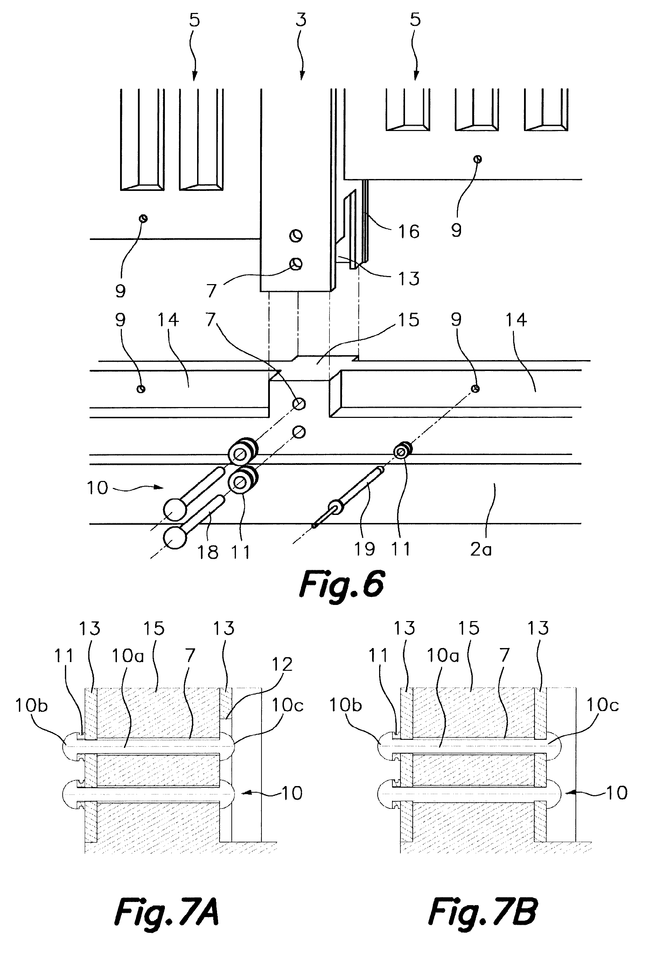

According to a first embodiment shown in Figures 5 and 7A, the coupling portion 13 has an access opening 12 in a face opposite the face where the fixing holes 7 of said coupling portion 13 are located.

According to a second embodiment shown in Figure 7B, the coupling portion 13 has fixing holes 7 axially aligned in two of its opposite faces, complementary to the fixing holes 7 of the protuberance 15.

Bolts 10 provided with a shank 10a, having an outer head 10b and an inner head 10c, which bolt will be a rivet 18 applied by hot riveting in the example described in this embodiment, are inserted in these fixing holes 7. Said bolt 10 solidly and permanently attaches and fixes the pillar 3 through a coupling portion 13 to the lower platform 2a and upper platform 2b through the protuberances 15, forming the structural frame.

In the first embodiment shown in Figure 7A, the inner head 10c of the bolt 10 does not interfere with said coupling portion 13 because the access opening 12 is larger than the mentioned inner heads 10C, such that the hot-formed rivets 18 attach the protuberance 15 to the outer face of the coupling portion 13 through the fixing holes 7, absorbing the mentioned coupling clearance.

In the second embodiment shown in Figure 7B, the hot-formed rivets 18 attach the protuberance 15 to two of the faces of the coupling portion 13 through the fixing holes 7.

In all the described embodiments, a spacer 11 is interposed between the outer head 10b and the outer wall of the pillar 3, such that said outer head 10b projects from the outer plane of the container 1. Said spacer 11 is reel-shaped, said spacer comprising respective flanges at its ends, a portion of the shank 10a therefore being accessible to cutting tools, while at the same time maintaining the mechanical properties of the bolt 10.

The closure panels 5 have vertical edges 4a configured for being fitted in the vertical channels 16, and horizontal edges 4b configured for being fixed to the step of the peripheral partition walls 14. The horizontal edges 4b have boreholes 9 complementary to the boreholes 9 of the peripheral partition wall 14, configured for being axially aligned when the closure panel 5 is inserted in the vertical channels 16. These boreholes 9 are used for fixing the closure panels 5 to the lower platform 2a and upper platform 2b by means of cold-drawn deformed rivets 19.

The method for the automatic dismounting of the reusable dismountable container 1 is described below.

In a first step, the container is placed in an automated cutting station, in a specific position with the aid of guiding stops. Once the container 1 is in place, automatic cutting tools cut all the shanks 10a and all the spacers 11 projecting from two of the outer faces of the container 1. The outer head 10b of all the bolts 10 is removed after this operation, and the pieces of all the bolts 10 left can be removed by pushing them into the container 1.

The container remains assembled after this operation, but its parts are no longer fixed together, so it can be disassembled by means of cranes, starting with the upper platform 2b, the closure panels 5, and the door panel 20, and ending with the pillars 3.

All the removed parts are placed on the lower platform 2a in the space confined between the peripheral partition walls 14 and are covered with the upper platform 2b, generating a flat bundle 17 that contains all the parts forming the dismountable container 1 object of the present invention.

The assembly process will be similar to the dismounting process but in reverse order, starting with removing the parts forming the flat bundle 17, assembling them, and completing it by attaching the parts by means of rivets 18 applied by hot riveting to assure the structural frame, and cold-deformed rivets 19 for the closure panels 5.

A person skilled in the art could introduce changes and modifications in the described embodiments without departing from the scope of the invention as defined in the attached claims.

## Claims

1. A reusable, dismountable freight transport container including:
- at least one lower platform (2a) and at least one upper platform (2b);
- a plurality of pillars (3);
- connecting means with fixing holes for attaching said platforms to said pillars, forming a structural frame;
- perimetral closure panels (5) fixed to said structural frame;
**characterized in that**
- the mentioned lower and upper platforms (2a and 2b) include a plurality of protuberances (15) in peripheral areas where the mentioned fixing holes (7) are made;
- the mentioned pillars (3) comprise in at least one end section:
o a coupling portion (13) for coupling in said protuberances (15);
o holes complementary to the fixing holes (7) of said protuberances (15);
- said connecting means (6) comprise bolts (10) inserted with clearance in said holes of the protuberances (15) and of the coupling portions (13), said parts being coupled, and said bolts having an outer head (10b) and an inner head (10c);
- said bolts (10) include a spacer (11) interposed between said outer head (10b) and an outer face of the container (1), such that said outer head (10b) projects from the plane formed by said outer face of the container (1); and
- said bolts (10) project from outer faces of the container (1);
such that the outer heads (10b) of the bolts (10) are accessible through said outer faces enabling an automated dismounting of the structural frame by cutting said outer heads (10b).

2. The dismountable container according to claim 1, **characterized in that** said outer heads (10b) of said bolts (10) project from two opposite outer faces of the container (1).

3. The dismountable container according to claim 1 or 2, **characterized in that** said bolts (10) are rivets (18) applied by hot riveting.

4. The dismountable container according to claim 1, 2 or 3, **characterized in that** the coupling portions (13) of the pillars (3) have at least one access opening (12) in one of their faces of a size that is sufficient for assuring that the inner head or heads (10c) of the bolts (10) do not interfere with said face, such that said bolts (10) attach the protuberances (15) only to the wall of the pillar (3) opposite said face.

5. The dismountable container according to any one of the preceding claims, **characterized in that** the spacers (11) are reel-shaped, said spacers comprising respective flanges at their ends.

6. The dismountable container according to any one of the preceding claims, **characterized in that** the pillars (3) have vertical channels (16) along their entire length, complementary to the side edges of the closure panels (5), said channels (16) acting as a guide and retainer of said closure panels (5).

7. The dismountable container according to any one of the preceding claims, **characterized in that** the closure panels (5) are attached to the lower and upper platforms (2a and 2b) through peripheral partition walls (14) of said platforms and by means of attachment by bolts (10), providing protruding parts projecting from the outer faces of the container and being separated from said faces by a spacer (11).

8. The dismountable container according to claim 7, **characterized in that** said bolts for attaching the closure panels (5) to the mentioned peripheral partition walls (14) are cold-drawn deformed rivets (19), applied from outside the container (1).

9. The dismountable container according to claim 7, **characterized in that** said closure panels (5) comprise stepped end portions which are coupled to the mentioned peripheral partition walls (14).

10. A method for automatically dismounting a reusable dismountable container and preparing it for transport, said container integrating:
- at least one lower platform (2a) and at least one upper platform (2b);
- a plurality of pillars (3);
- connecting means (6) with fixing holes (7) for attaching said lower and upper platforms (2a and 2b) to said pillars (3), forming a structural frame;
- perimetral closure panels fixed to said frame;
and the method comprising separating the upper platform (2b), separating and removing said closure panels (5), separating said pillars (3) and stacking the set of components of the container (1) on the lower platform (2a), resulting in a compact set;
**characterized in that** the pillars (3) are attached to the lower and upper platforms (2a and 2b) and the closure panels (5) are attached to said platforms by means of bolts (10) provided with outer heads (10b) projecting from outer faces of the container (1), said outer heads (10b) being accessible to a cutting tool; and the components of the container (1) are separated by automated cutting of said outer heads (10b), loosening the bolts (10) for extraction.

11. The method for dismounting a reusable container according to claim 10, **characterized in that** said bolts (10) are arranged in two opposite outer faces of the container (1), accessing them by automated cutting means and by cutting a segment located on the outside of the container (1), which includes their outer head (10b).

12. The method for dismounting a reusable container according to claim 10, 9 or 10, **characterized in that** all the operations for disassembling the container (1) are performed without accessing the inside of the container.
